# EUROPÄISCHE PATENTSCHRIFT

(11) **EP 1 636 949 B1**
(45) Veröffentlichungstag und Bekanntmachung des Hinweises auf die Patenterteilung: **02.11.2006**
(21) Anmeldenummer: 04741856.1
(22) Anmeldetag: 22.06.2004
(51) Int. Cl.: H04L 12/56

(54) **VERFAHREN UND NETZKNOTEN ZUR WEGESUCHE IN EINEM PAKETVERMITTELNDEN KOMMUNIKATIONSNETZ**
METHOD AND NETWORK NODES FOR PATH SEARCHING IN A PACKET-ORIENTED COMMUNICATION NETWORK
PROCEDE ET NOEUD DE RESEAU POUR LA RECHERCHE DE LIAISON DANS UN RESEAU DE COMMUNICATION A COMMUTATION PAR PAQUETS

(30) Priorität: 25.06.2003 DE 10328620
(43) Veröffentlichungstag der Anmeldung: 22.03.2006
(73) Patentinhaber: SIEMENS AKTIENGESELLSCHAFT, 80333 München (DE)
(72) Erfinder: SCHOLLMEIER, Gero, 82131 Gauting (DE); WINKLER, Christian, 80796 München (DE)
(86) Internationale Anmeldenummer: PCT/EP2004/051192
(87) Internationale Veröffentlichungsnummer: WO 2004/114606

(56) Entgegenhaltungen:
- EP-A- 0 926 859
- WO-A-03/013056

## Beschreibung

Die Erfindung betrifft ein Verfahren nach dem Oberbegriff des Anspruchs 1 und einen Netzknoten nach dem Oberbegriff des Anspruchs 5.

Paketvermittelnde Kommunikationsnetze, wie beispielsweise ein Internet-Protokoll-Netz, kurz IP-Netz, übertragen elektronische Daten in Form von Paketen bzw. Pulsrahmen von einem Quell-Netzknoten zu einem Ziel-Netzknoten über verschiedene zwischenliegende Netzknoten des Kommunikationsnetzes. Jeder Netzknoten des Kommunikationsnetzes kann die Funktion als Quell- oder Zielnetzknoten für Datenpakete übernehmen. Die Netzknoten sind durch Verbindungen respektive Verbindungswege bzw. Links miteinander verbunden. Jedem dieser Netzknoten, wie Router, Switches, Gateways, Bridges, Netzelementen, etc., ist dabei mindestens eine Netzknotenadresse, z.B. eine IP-Adresse, zugewiesen.

Die Netzknotenadressen, Topologieinformationen und weitere Daten werden über Routing-Protokolle, wie OSPF, RIP, BGP, IS-IS, usw., an die Netzknoten des Kommunikationsnetzes verteilt. Die Informationen werden mit Hilfe sogenannter Protokoll Data Units, kurz PDUs, übertragen. Die PDUs enthalten, abhängig vom Routing-Protokoll, Informationen über den eigenen Netzknoten und den daran angeschlossenen Nachbarnetzknoten. Dadurch hat jeder Netzknoten Informationen über die im Kommunikationsnetz enthaltenen Netzknoten und deren Nachbarnetzknoten, so dass jeder Netzknoten einen Netzplan des Kommunikationsnetzes daraus erstellen kann bzw. könnte. Durch Auswertung und Speicherung der in den Routing-Protokoll-PDUs enthaltenen Informationen bzw. der ermittelten Netzsicht kann jeder Netzknoten anhand bekannter Protokolle bzw. Algorithmen jeweils Routen zu allen Netzknoten des Kommunikationsnetzes berechnen und speichern. Routing-Protokolle, wie OSPF und IS-IS, haben dabei zwei Hauptfunktionen:
1. Protokoll zur Erkennung der Topologie bzw. zum Aufsammeln der zur Wegesuche benötigten Information.
2. Wegesuche und Abbilden der ausgewählten Wege in einer Routing Tabelle, Forwarding Lookup Tabelle, Forwarding Information Base bzw. Steuerungstabelle des Netzknoten.

Ein Algorithmus zur Berechnung von Routen bzw. Wegen zu einem Netzknoten in einem Netz ist beispielsweise das shortest path Wegesuch-Verfahren, das in den Routing-Protokollen OSPF und IS-IS angewendet wird. Um dessen Beschränkung im Hinblick auf die sogenannte Quality of Service, kurz QoS, und Verfügbarkeit zu umgehen, werden mittlerweile auch erweiterte Wegesuch-Verfahren vorgeschlagen, wie das Mehrwege- respektive Multipath-Routing. Eine Art von Multipath-Routing ist das sogenannte equal cost multipath Verfahren, kurz ECMP.

Je nach Netz-Topologie führt eines der verfügbaren Wegesuch-Verfahren zu einer besseren Lösung.

Die durch einen im Netzknoten implementierten Algorithmus ermittelten Routen, Wege bzw. Routing-Wege zu einem Ziel-Netzknoten bzw. zu einem an einem Netzknoten angeschlossenen Ziel-System werden dabei in einer sogenannte Routing-Tabelle, Forwarding Lookup Tabelle, Steuerungstabelle bzw. Forwarding Information Base des Netzknotens abgespeichert. Diese enthält die Netzknotenadresse des Ziel-Netzknotens bzw. Ziel-Systems, die Netzknotenadresse des zu diesem Ziel führenden Nachbarnetzknotens und weitere Informationen.

Eingehende Datenpakete mit einer Ziel-Netzknotenadresse können an Hand der Routing-Tabelle zum Ziel-Netzknoten weitergeleitet werden. Dabei wird die Ziel-Netzknotenadresse mit den Einträgen in der Routing-Tabelle verglichen und bei Übereinstimmung der Nachbarnetzknoten und das Interface ermittelt, über die das Paket zum Ziel-Netzknoten übertragen wird.

Ein heutiger Router kann zur Bildung seiner Routing-Tabelle oder Forwarding Lookup Tabelle, nach der dann bei der Datenpaketweiterleitung für jedes Paket der next hop bestimmt wird, Ergebnisse aus den durch den Algortihmus ausgewerteten Routing-Informationen und durch manuell konfigurierte statische Routen heranziehen.

Das Dokument US2002/45453 offenbart ein Verfahren zur Bestimmung eines Pfades in einem Kommunikationssystem bei der der Pfad eine Kostenfunktion minimiert.

Aufgabe der vorliegenden Erfindung ist, die Routing-Wegfindung in einem Netzknoten eines paketvermittelnden Kommunikationsnetzes zu verbessern.

Diese Aufgabe wird durch ein Verfahren mit den Merkmalen des Anspruchs 1 und durch einen Netzknoten mit den Merkmalen des Anspruchs 5 gelöst.

Durch die Verwendung mindestens zweier bzw. mehrerer Wegesuchverfahren zu einem Netzknoten bzw. Ziel-System des Kommunikationsnetzes ist es möglich, unterschiedliche, der Netz-Topologie optimal angepasste Wegesuch-Strategien in einem Netzknoten bzw. Netz gleichzeitig als "Wegesuch-Baukasten" zu kombinieren. Der Vorteil besteht darin, eine der Topologie optimal angepasste Routing-Wegeführung zu ermöglichen. Zudem können die Beschränkungen eines im allgemeinen guten Wegesuchverfahrens durch die Kombination mit einem speziellen Wegesuchverfahren ausgeglichen werden.
Vorteilhafte Weiterbildungen der Erfindung sind in den Unteransprüchen angegeben.

Die Anwendung eines Mehrwege-Suchverfahrens und eines shortest path Suchverfahrens bzw. Algorithmus in einem Netzknoten eines Kommunikationsnetzes hat den Vorteil, dass in nicht vollständig mehrwegefähigen Kommunikationsnetzen neue Wegesuch-Strategien eingeführt werden können. Z.B. kann ein Netz bei der Einführung eines Mehrwege-Routing-Verfahrens mit der Forderung nach mindestens zwei disjunkten Routing-Wegen topologische Einschränkungen besitzen, die ein durchgängiges Mehrwege-Routing mit zwei Routen verhindern. So lange diese Situation besteht, kann hier das Mehrwege-Verfahren mit dem shortest path Verfahren kombiniert werden.

Eine Ausführungsbeispiel der Erfindung ist in der Zeichnung dargestellt und wird im folgenden beschrieben.

Dabei zeigt:
Figur 1 einen Ausschnitt aus einem Netzknoten zur Anwendung des erfindungsgemäßen Verfahrens.
Figur 2 eine Variante eines Netzknotens nach Figur 1.

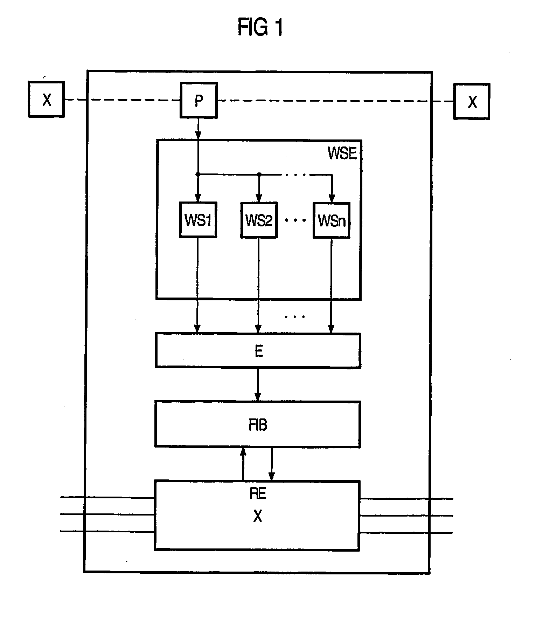

Die Figur 1 zeigt einen Ausschnitt aus einem Netzknoten, der in einem aus mehreren Netzknoten bestehenden Kommunikationsnetz betrieben wird. Dargestellt ist eine Protokollauswerteeinrichtung P, der Routing-Protokoll PDUs anderer Netzknoten empfängt und diese auswertet. Die Protokollauswerteeinrichtung P führt die empfangenen Informationen einer Wegesucheinrichtung WSE zu, die diese Informationen aufteilt und mehreren Wegesuchverfahren WS1, ..., WSn zuführt. Die Wegesuchverfahren WS1, ..., WSn ermitteln jeweils mit unterschiedlichen Algorithmen bzw. aufgrund unterschiedlicher Algorithmen verschiedene Wege zu den Netzknoten, Ziel-Netzknoten bzw. den an den Netzknoten angeschlossenen Ziel-Systemen des Kommunikationsnetzes. Beispielsweise ermittelt das erste Wegesuchverfahren WS1 mit einem shortest-path Algorithmus, wie dem Dijkstra-Algortihmus, den kürzesten Weg zu den jeweiligen Netzknoten. Das zweite Wegesuchverfahren WS2 ermittelt mit einem Mehrwege- bzw. Multipath-Algorithmus eine Wegemenge zu einem jeweiligen Netzknoten. Ein drittes Wegesuchverfahren WS3 ermittelt durch einen weiteren Algorithmus, wie dem Bellman-Ford-Algorithmus, den kostengünstigsten, ausfallsichersten oder effektivsten Weg zu einem Netzknoten. Weitere Wegesuchverfahren ermitteln analog Routing-Wege zu Netzknoten entsprechend vorgegebener Randbedingungen bzw. Algorithmen. Die von den Wegesuchverfahren WS1, ..., WSn ermittelten Routing-Wege werden einem Entscheider E zugeführt, der aus den ermittelten Routing-Wegen jeweils einen für den Netzknoten in der jeweiligen Netz-Topologie optimalen oder entsprechenden Kriterien genügenden Routing-Weg zu einem Netzknoten auswählt. Der ausgewählte Routing-Weg zu einem Ziel-Netzknoten wird vom Entscheider einer Forwarding Information Base FIB respektive Routing-Tabelle oder Steuerungstabelle zugeführt, die diesen in eine Tabelle oder Datenbasis einträgt. An Hand der Forwarding Information Base FIB werden Datenpakete durch eine Routing-Einrichtung RE weitergeleitet bzw. geroutet. Dies erfolgt dadurch, dass zuerst die Ziel-Adresse eines empfangenen Datenpaketes durch die Routing-Einrichtung RE ermittelt wird. Diese Ziel-Adresse wird von der Routing-Einrichtung RE an die Forwarding Information Base FIB übermittelt. Durch Vergleich der Ziel-Adresse mit gespeicherten Werten wird der Ausgang respektive das Interface, der Port bzw. der Nachbarnetzknoten ermittelt, zu dem das Datenpaket gesendet werden muss, um zur Ziel-Adresse zu gelangen. Diese Information wird von der Forwarding Information Base FIB zur Routing-Einrichtung RE übertragen, die daraufhin das Datenpaket zum entsprechenden Netzknoten weiterleitet.

In einer Ausführung der Erfindung können die durch die verschiedenen Wegesuchverfahren ermittelten Routing-Wege bzw. Routen gemeinsam in die Forwarding Information Base FIB eingetragen, so dass mehrere, nach unterschiedlichen Verfahren ermittelte Routen parallel in der Forwarding Information Base FIB eingetragen und gemeinsam aktiv sind.

Ebenfalls kann das in der jeweiligen Situation zu verwendende Wegesuchverfahren nach verschiedensten Kriterien ausgewählt werden. So laufen mehrere Wegesuchverfahren nicht gleichzeitig ab, sondern es wird jeweils ein bestimmtes Wegesuchverfahren für einen bestimmten Netzknoten oder für einen bestimmten Ziel-Netzknoten verwendet. So kann je nach Eigenschaften des Netzknotens ein geeignetes Verfahren für die Routing-Wegeermittlung gewählt werden. Ebenso kann je nach Eigenschaften des Ziel-Netzknotens ein geeignetes Verfahren für die Routing-Wegeermittlung zu diesem Zielknoten ausgewählt und verwendet werden.

Es kann in einem Teil des Kommunikationsnetzes eine Mehrwege-Routing Verfahren verwendet werden und in einem anderen Teil des Kommunikationsnetzes ein shortest path Wegesuchverfahren verwendet werden. Ebenso können andere topologische Kriterien für die Wegesuche verwendet werden. Es lassen sich Routing-Wege durch Wegesuchverfahren bzw. entsprechende Algorithmen nach verschiedenen Kriterien wie Kosten, Redundanzanforderungen oder Qualität ermitteln.

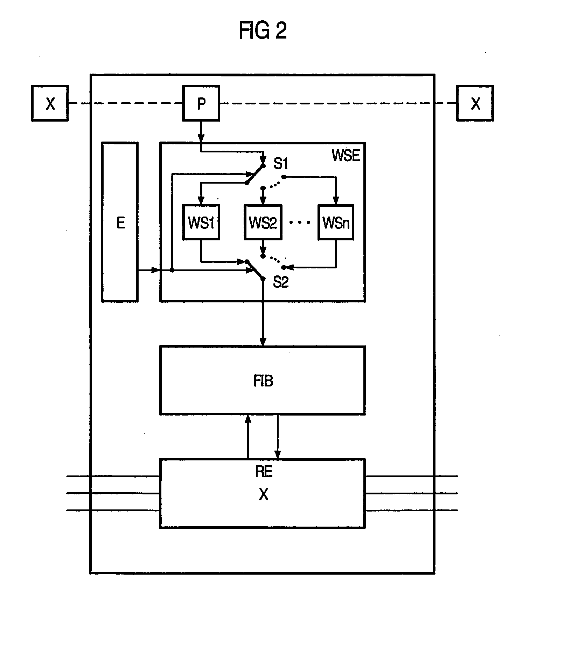

Figur 2 zeigt einen Ausschnitt aus einem Netzknoten gemäß Figur 1, mit dem Unterschied, dass die von der Protokollauswerteeinrichtung P der Wegesucheinrichtung WSE zugeführten Informationen in der Wegesucheinrichtung WSE über eine erste Schaltvorrichtung S1 zu einem von mehreren möglichen Wegesuchverfahren WS1, ..., WSn führen. Die Ausgänge der Wegesuchverfahren WS1, ..., WSn sind über eine zweite Schaltvorrichtung S2 mit dem Eingang der Forwarding Information Base FIB verbunden. Die beiden Schaltvorrichtungen S1 und S2 werden parallel durch den Entscheider E gesteuert derart, dass die Informationen der Protokollauswerteeinrichtung P jeweils einem "ausgewählten" Wegesuchverfahren und die durch das ausgewählte Wegesuchverfahren ermittelten Routing-Wege der Forwarding Information Base FIB zugeführt werden. In diesem Fall wählt der automatisch oder manuell gesteuerte Entscheider E eines von mehreren im Netzknoten implementierten Wegesuchverfahren bzw. Algorithmen für die Routing-Wegfindung des Netzknotens aus.

In einer Ausgestaltung ermittelt jeder Netzknoten aufgrund der zwischen den Netzknoten durch Routing-Protokolle ausgetauschten Topologie-Informationen zunächst die Netzstruktur und analysiert diese. Anschließend ordnet er nach bestimmten vorgegebenen Kriterien bestimmten Ziel-Knoten, Netz-Abschnitten, Leitungen oder Adressbereichen ein entsprechendes Wegesuch-Verfahren zu. Die Ergebnisse der Wegesuche werden dann in der Forwarding Information Base FIB bzw. Routing-Tabelle eingetragen.

Der Entscheider für das optimale Wegesuchverfahren kann:
- manuell durch ein externes Managementsystem gesteuert sein, indem jedem Netzknoten manuell vorgegeben wird, welches Wegesuchverfahren oder Wegesuchergebnis er verwenden soll,
- nach vorgegebene Merkmalen oder Randbedingungen ein Wegesuchverfahren automatisch auswählen,
- nach vorgegebenen topologischen Merkmalen bzw. Gesichtspunkten die Ergebnisse einer Wegesuche verwenden
- pro Ziel-Netzknoten ein bestimmtes Wegesuchverfahren verwenden bzw. die Ergebnisse eines bestimmten Wegesuchverfahrens / Algorithmus verwenden oder
- nach anderen Kriterien auswählen.

Der Kern des Erfindung besteht darin, dass ein Netzknoten Routing-Wege nach mehreren Wegesuch-Verfahren bzw. Algorithmen ermitteln kann. Das kann dadurch erfolgen, dass aus den ausgetauschten Topologie-Informationen eines Routing-Protokolls durch mehrere Algorithmen bzw. Wegesuchverfahren parallel mehrere Routing-Wege ermittelt werden. Dies erfolgt unabhängig vom verwendeten Routing-Protokoll und diesem Protokoll zugeordneten Wegesuchverfahren. Das bedeutet, dass unabhängig vom verwendeten Routing Protokoll, wie OSPF, RIP, IS-IS, BGP, usw., mehrere Routing-Wege nach unterschiedlichen Algorithmen ermittelt werden. Es werden nur die Topologie-Informationen des eingesetzten Routing-Protokolls verwendet. Ein durch bestimmte Kriterien gesteuerter Entscheider ermittelt dann die für den jeweiligen Zweck passenden Routing-Wege. Hierbei können auch mehrere Routing-Wege, wie Backup-Routing-Wege, in die Forwarding Information Base FIB bzw. Routing-Tabelle eingetragen werden.

Ebenfalls kann abhängig vom Entscheider ein bestimmtes Wegesuchverfahren bzw. ein bestimmter Algorithmus aus einer Reihe verfügbarer Verfahren bzw. Algorithmen die Routing-Wege zu einem Ziel-Netzknoten für einen Netzknoten ermitteln.

## Patentansprüche

1. Verfahren zur Wegesuche in einem Netzknoten, für ein mehrere Netzknoten aufweisendes paketvermittelndes Kommunikationsnetz, bei dem mindestens ein Netzknoten ein Zielnetzknoten ist,
bei dem der Netzknoten mittels eines Routing-Protokolls Informationen austauscht, dem Routing-Protokoll jeweils ein Wegesuchverfahren zugeordnet ist und der Netzknoten ein Wegesuchverfahren zu einem Zielnetzknoten ausführt, dessen Ergebnisse in einer Routing Tabelle gespeichert werden,
**dadurch gekennzeichnet,**
**dass** in dem Netzknoten die Informationen des Routing-Protokolls durch mindestens zwei unterschiedliche Wegesuchverfahren ausgewertet werden und dass für jeden Ziel-Netzknoten ein bestimmtes Wegesuchverfahren ausgewählt wird, dessen Ergebnis in der Routing-Tabelle gespeichert wird.

2. Verfahren nach Anspruch 1,
**dadurch gekennzeichnet,**
**dass** die in einem Netzknoten durch die Wegesuchverfahren ermittelten, zu einem Zielnetzknoten führenden Verbindungswege jeweils gespeichert werden, einem Entscheider zugeführt werden, der aus der Menge der durch die Wegesuchverfahren ermittelten, zu einem Zielnetzknoten führenden Verbindungswege einen Verbindungsweg auswählt und diesen Verbindungsweg in eine Routing-Tabelle / Steuerungstabelle des Netzknotens einträgt.

3. Verfahren nach Anspruch 1 oder 2,
**dadurch gekennzeichnet,**
**dass** als Wegesuchverfahren ein Shortest-Path-Wegesuchverfahren verwendet wird.

4. Verfahren nach Anspruch 1, 2 oder 3,
**dadurch gekennzeichnet,**
**dass** als Wegesuchverfahren ein Multipath- respektive Mehrwegesuchverfahren verwendet wird.

5. Netzknoten für ein mehrere Netzknoten aufweisendes paketvermittelndes Kommunikationsnetz, bei dem mindestens ein Netzknoten ein Zielnetzknoten ist oder an mindestens einem Netzknoten ein Ziel-System angeschlossen ist und
in dem Netzknoten des Kommunikationsnetzes Informationen eines Routing-Protokolls austauschbar sind, wobei dem Routing-Protokoll jeweils ein Wegesuchverfahren zugeordnet ist, und ein Algorithmus zur Wegesuche zu einem Ziel-Netzknoten oder Ziel-System gespeichert ist, dessen Wegesuch-Ergebnisse in einer Routing-Tabelle gespeichert sind,
**dadurch gekennzeichnet,**
**dass** in dem Netzknoten wenigstens zwei unterschiedliche Algorithmen zur Wegesuche gespeichert sind, denen die Informationen eines Routing-Protokolls zuführbar sind und
**dass** in der Routing-Tabelle für jeden Zielnetzknoten das Ergebnis eines bestimmten Wegesuch-Algorithmus gespeichert ist.

6. Netzknoten nach Anspruch 5,
**dadurch gekennzeichnet,**
**dass** zu Auswahl der Ergebnisse der verschiedenen Algorithmen zur Wegesuche ein Entscheider vorgesehen ist.

7. Netzknoten nach Anspruch 5,
**dadurch gekennzeichnet,**
**dass** durch einen Entscheider einer der verfügbaren Algorithmen zur Wegesuche auswählbar ist und dessen Ergebnisse in die Routing-Tabelle eintragbar sind.

8. Netzknoten nach Anspruch 5, 6 oder 7,
**dadurch gekennzeichnet,**
**dass** pro Ziel-Netzknoten oder Ziel-System einer der verfügbaren Algorithmen zur Wegesuche auswählbar ist und dessen Ergebnisse in die Routing-Tabelle eintragbar sind.

## Claims

1. Method for path searching in a network node for a packet-switching communication network comprising a number of network nodes, in which at least one network node is a destination network node,
in which the network node exchanges information by means of a routing protocol, a path search method is assigned respectively to the routing protocol and the network node executes a path search method to a destination network node, the results of which are stored in a routing table,
**characterised in that**
in the network node the routing protocol information is evaluated by means of at least two different path search methods and a specific path search method is selected for each destination network node, the result of which is stored in the routing table

2. Method according to claim 1,
**characterised in that**
the connection paths established by means of the path search method in a network node and leading to a destination network node are stored respectively, fed to a discriminator, which selects one connection path from the set of connection paths established by means of the path search methods and leading to a destination network node and inputs this connection path in a routing table/control table of the network node.

3. Method according to claim 1 or 2,
**characterised in that**
a shortest path search method is used as the path search method.

4. Method according to claim 1, 2 or 3,
**characterised in that**
a multipath search method is used as the path search method.

5. Network node for a packet-switching communication network comprising a number of network nodes, in which at least one network node is a destination network node or a destination system is linked to at least one network node and routing protocol information can be exchanged in the network node of the communication network, with a path search method being assigned respectively to the routing protocol and a path search algorithm to a destination network node or destination system being stored, the path search results of which are stored in a routing table,
**characterised in that**
at least two different path search algorithms are stored in the network node, to which routing protocol information can be fed and the result of a specific path search algorithm is stored in the routing table for every destination network node.

6. Network node according to claim 5,
**characterised in that**
a discriminator is provided to select the results of the different path search algorithms.

7. Network node according to claim 5,
**characterised in that**
one of the available path search algorithms can be selected by a discriminator and its results can be input in the routing table.

8. Network node according to claim 5, 6 or 7,
**characterised in that**
one of the available path search algorithms can be selected for each destination network node or destination system and its results can be input in the routing table.

## Revendications

1. Méthode de recherche de chemins dans un noeud de réseau pour un réseau de communication à commutation par paquets comportant plusieurs noeuds de réseau, dans lequel au moins un noeud de réseau est un noeud de réseau de destination,
dans laquelle le noeud de réseau échange des informations au moyen d'un protocole de routage, une méthode de recherche de chemins est respectivement affectée au protocole de routage et le noeud de réseau exécute une méthode de recherche de chemins vers un noeud de réseau de destination, dont les résultats sont stockés dans une table de routage, **caractérisée en ce que** les informations du protocole de routage sont évaluées dans le noeud de réseau par au moins deux méthodes différentes de recherche de chemins et **en ce que**, pour chaque noeud de réseau de destination, une méthode déterminée de recherche de chemins est sélectionnée, dont le résultat est stocké dans la table de routage.

2. Méthode selon la revendication 1, **caractérisée en ce que** les chemins de liaison déterminés par les méthodes de recherche de chemins dans un noeud de réseau et menant à un noeud de réseau de destination sont respectivement stockées, amenées à un décideur qui, à partir de l'ensemble des chemins de liaison déterminés par les méthodes de recherche de chemins et menant à un noeud de réseau de destination, sélectionne un chemin de liaison et enregistre ce chemin de liaison dans une table de routage / table de commande du noeud de réseau.

3. Méthode selon la revendication 1 ou 2, **caractérisée en ce qu'**une méthode de recherche de chemins «shortest path» est utilisée en tant que méthode de recherche de chemins.

4. Méthode selon la revendication 1, 2 ou 3, **caractérisée en ce qu'**, une méthode de recherche multipath resp. multi-chemins est utilisée en tant que méthode de recherche de chemins.

5. Noeud de réseau pour un réseau de communication à commutation par paquets comportant plusieurs noeuds de réseau, dans lequel au moins un noeud de réseau est un noeud de réseau de destination ou un système de destination est connecté à au moins un noeud de réseau et des informations d'un protocole de routage peuvent être échangées dans le noeud de réseau du réseau de communication, une méthode de recherche de chemins étant respectivement affectée au protocole de routage et un algorithme de recherche de chemins vers un noeud de réseau de destination ou un système de destination étant stocké, dont les résultats de la recherche de chemins sont stockés dans une table de routage, **caractérisé en ce que** sont stockés, dans le noeud de réseau, au moins deux algorithmes différents de recherche de chemins, auxquels les informations d'un protocole de routage peuvent être amenées et **en ce qu'**est stocké, dans la table de routage, pour chaque noeud de réseau de destination, le résultat d'un algorithme déterminé de recherche de chemins.

6. Noeud de réseau selon la revendication 5, **caractérisé en ce qu'**est prévu un décideur pour la sélection des résultats des différents algorithmes de recherche de chemins.

7. Noeud de réseau selon la revendication 5, **caractérisé en ce que** l'un des algorithmes disponibles de recherche de chemins peut être sélectionné par un décideur et ses résultats peuvent être enregistrés dans la table de routage.

8. Noeud de réseau selon la revendication 5, 6 ou 7, **caractérisé en ce que**, pour chaque noeud de réseau de destination ou système de destination, l'un des algorithmes disponibles de recherche de chemins peut être sélectionné et ses résultats peuvent être enregistrés dans la table de routage.
